# EUROPEAN PATENT APPLICATION

(11) **EP 4 738 791 A1**
(43) Date of publication of application: **06.05.2026**
(21) Application number: 24850777.4
(22) Date of filing: 19.07.2024
(51) Int. Cl.: H04L 49/9057, H04W 4/06

(54) **COMMUNICATION METHOD, SYSTEM AND APPARATUS**

(30) Priority: 10.08.2023 CN 202311008114
(71) Applicant: Huawei Technologies Co., Ltd., Shenzhen, Guangdong 518129 (CN)
(72) Inventor: ZHANG, Qian, Shenzhen, Guangdong 518129 (CN); LIN, Yongbiao, Shenzhen, Guangdong 518129 (CN); ZHANG, Yule, Shenzhen, Guangdong 518129 (CN); SHU, Difei, Shenzhen, Guangdong 518129 (CN)
(74) Representative: Pfenning, Meinig & Partner mbB
(86) International application number: PCT/CN2024/106524
(87) International publication number: WO 2025/031127

(57) **Abstract**

This application provides a communication method, system, and apparatus. The method may provide a solution in which an appropriate resource can be configured for data transmission between an application server and a terminal device. The method includes: The application server sends a data packet to a service management network element, where a data volume of the data packet in a scheduling period (which may be any scheduling period) is greater than a first value; and the service management network element processes the data packet, to cause a data volume of a processed data packet in the scheduling period to be less than or equal to the first value; and then sends the processed data packet to a network device. In this way, the network device may uniformly configure a resource for a data packet from the application server, so that a phenomenon like excessive resource allocation or insufficient resource allocation can be effectively avoided, and an appropriate resource can be configured for data transmission between the application server and the terminal device.

## Description

This application claims priority to Chinese Patent Application No. 202311008114.6, filed with the China National Intellectual Property Administration on August 10, 2023 and entitled "COMMUNICATION METHOD, SYSTEM, AND APPARATUS", which is incorporated herein by reference in its entirety.

### TECHNICAL FIELD

This application relates to the field of communication technologies, and more specifically, to a communication method, system, and apparatus.

### BACKGROUND

Currently, a 3rd generation partnership project (3rd generation partnership project, 3GPP) standard defines a group communication service (group communication service, GCS), and same content can be delivered to a plurality of terminal devices in a controlled manner.

Specifically, an application server (application server, AS) in the GCS may use a multimedia broadcast/multicast service (multimedia broadcast/multicast service, MBMS) bearer service or an evolved MBMS (evolved MBMS, eMBMS) bearer service, and these services are used to support data transmission between the application server and the terminal device.

However, the foregoing GCS mechanism cannot support configuration of an appropriate resource for data transmission between the application server and the terminal device, resulting in a problem of excessive resource allocation or insufficient resource allocation. Therefore, how to configure an appropriate resource for data transmission between the application server and the terminal device is an urgent technical problem to be resolved currently.

### SUMMARY

This application provides a communication method, system, and apparatus, to configure an appropriate resource for data transmission between an application server and a terminal device.

According to a first aspect, a communication method is provided. The method includes: receiving a first data packet, where a data volume of the first data packet in a first scheduling period is greater than a first value; and sending a second data packet, where the second data packet is a data packet obtained by processing the first data packet, and a data volume of the second data packet in the first scheduling period is less than or equal to the first value.

The solution in the first aspect may be performed by a service management network element, or a module, a chip, or the like configured to perform a function of the service management network element. This is not limited. For ease of description, the following uses the service management network element as an example for description.

It may be understood that the first scheduling period may be any scheduling period, and the first data packet may be any data packet whose data volume is greater than the first value.

Specifically, when a data volume of a data packet received by the service management network element is greater than the first value, the service management network element may process the data packet, so that a data volume of a processed data packet is less than or equal to the first value. In this way, a network device may configure an appropriate resource for the data packet, and a phenomenon like excessive resource allocation or insufficient resource allocation can be avoided.

In a possible implementation, that the second data packet is the data packet obtained by processing the first data packet includes: The second data packet is a data packet obtained by allocating an additional data volume of the first data packet to a second scheduling period, and the additional data volume of the first data packet is a difference between the data volume of the first data packet in the first scheduling period and the first value.

In this way, the data volume of the second data packet in the first scheduling period may be less than or equal to the first value.

In a possible implementation, the first value is a maximum data volume that can be scheduled by the network device in the first scheduling period.

In this way, a data volume of a data packet from the service management network element may not exceed a maximum scheduling capability of the network device.

In a possible implementation, the method further includes: receiving the first value.

In this way, the service management network element may process the first data packet based on the first value.

In a possible implementation, the first value is a ratio of a guaranteed bit rate of the first data packet to a scheduling period of the first data packet.

In this way, the network device can configure an appropriate resource for data packet transmission based on the guaranteed bit rate of the first data packet and the scheduling period of the first data packet.

In a possible implementation, the scheduling period of the first data packet is preconfigured.

In this way, the service management network element can obtain a value of the scheduling period of the first data packet without interacting with another device, to reduce signaling overheads.

In a possible implementation, the method further includes: receiving the scheduling period of the first data packet.

In this way, the service management network element can determine the first value.

In a possible implementation, the first scheduling period is adjacent to the second scheduling period.

In this way, complexity of processing the data volume of the first data packet can be reduced.

In a possible implementation, the ratio of the guaranteed bit rate of the first data packet to the scheduling period of the first data packet is less than or equal to the maximum data volume that can be scheduled by the network device in the first scheduling period.

In this way, a data volume of a data packet from the service management network element may not exceed the maximum scheduling capability of the network device.

In a possible implementation, the first scheduling period is a first multicast channel scheduling period (multicast channel scheduling period, MSP), and the second scheduling period is a second MSP.

In this way, this solution is compatible with conventional technologies.

According to a second aspect, a communication method is provided. The method includes: receiving a second data packet, where the second data packet is a data packet obtained by processing a first data packet, a data volume of the first data packet in a first scheduling period is greater than a first value, and a data volume of the second data packet in the first scheduling period is less than or equal to the first value; and sending the second data packet.

The solution in the second aspect may be performed by a network device, or a module, a chip, or the like configured to perform a function of the network device. This is not limited. For ease of description, the following uses the network device as an example for description.

In a possible implementation, that the second data packet is the data packet obtained by processing the first data packet includes: The second data packet is a data packet obtained by allocating an additional data volume of the first data packet to a second scheduling period, and the additional data volume of the first data packet is a difference between the data volume of the first data packet in the first scheduling period and the first value.

In a possible implementation, the first value is a maximum data volume that can be scheduled by the network device in the first scheduling period.

In a possible implementation, the method further includes: sending the first value.

In a possible implementation, a scheduling period of the first data packet is preconfigured.

In a possible implementation, the method further includes: sending the scheduling period of the first data packet.

In a possible implementation, the first scheduling period is adjacent to the second scheduling period.

In a possible implementation, the ratio of the guaranteed bit rate of the first data packet to the scheduling period of the first data packet is less than or equal to the maximum data volume that can be scheduled by the network device in the first scheduling period.

In a possible implementation, the first scheduling period is a first MSP, and the second scheduling period is a second MSP.

For the foregoing descriptions, refer to the corresponding descriptions in the first aspect. Details are not described again.

According to a third aspect, a communication system is provided. The communication system includes: a service management network element and a network device. The service management network element is configured to receive a first data packet, where a data volume of the first data packet in a first scheduling period is greater than a first value; the service management network element is configured to send a second data packet to the network device, where the second data packet is a data packet obtained by processing the first data packet by the service management network element, and a data volume of the second data packet in the first scheduling period is less than or equal to the first value; the network device is configured to receive the second data packet; and the network device is further configured to send the second data packet.

In a possible implementation, that the second data packet is the data packet obtained by processing the first data packet by the service management network element includes: The second data packet is a data packet obtained by allocating an additional data volume of the first data packet to a second scheduling period by the service management network element, and the additional data volume of the first data packet is a difference between the data volume of the first data packet in the first scheduling period and the first value.

In a possible implementation, the first value is a maximum data volume that can be scheduled by the network device in the first scheduling period.

In a possible implementation, the communication system further includes: a mobility management entity network element and a gateway network element. The network device is configured to send the first value to the mobility management entity network element; the mobility management entity network element is configured to receive the first value; and is configured to send the first value to the gateway network element; and the gateway network element is configured to receive the first value; and is configured to send the first value to the service management network element.

In a possible implementation, the first value is a ratio of a guaranteed bit rate of the first data packet to a scheduling period of the first data packet.

In a possible implementation, the scheduling period of the first data packet is preconfigured.

In a possible implementation, the communication system further includes: a mobility management entity network element and a gateway network element. The network device is configured to send a scheduling period of the first data packet to the mobility management entity network element; the mobility management entity network element is configured to receive the scheduling period of the first data packet; and is configured to send the scheduling period of the first data packet to the gateway network element; and the gateway network element is configured to receive the scheduling period of the first data packet; and is configured to send the scheduling period of the first data packet to the service management network element.

In a possible implementation, the first scheduling period is adjacent to the second scheduling period.

In a possible implementation, the ratio of the guaranteed bit rate of the first data packet to the scheduling period of the first data packet is less than or equal to the maximum data volume that can be scheduled by the network device in the first scheduling period.

In a possible implementation, the first scheduling period is a first MSP, and the second scheduling period is a second MSP.

According to a fourth aspect, a communication apparatus is provided. The communication apparatus may be a service management network element, or may be an apparatus (for example, a chip (also referred to as a chip system) or a circuit) in the service management network element, or may be an apparatus that can be used in cooperation with the service management network element.

In a possible implementation, the communication apparatus includes modules or units that one-to-one correspond to the methods/operations/steps/actions described in any one of the first aspect. The module or the unit may be implemented by a hardware circuit, software, or a hardware circuit in combination with software.

According to a fifth aspect, a communication apparatus is provided. The communication apparatus may be a network device, or may be an apparatus (for example, a chip (also referred to as a chip system) or a circuit) in the network device, or an apparatus that can be used in cooperation with the network device.

In a possible implementation, the communication apparatus may include modules or units that one-to-one correspond to the methods/operations/steps/actions described in any one of the second aspect. The module or the unit may be implemented by a hardware circuit, software, or a hardware circuit in combination with software.

According to a sixth aspect, a communication apparatus is provided. The communication apparatus includes a processor. The processor is configured to cause, by executing a computer program or instructions or by using a logic circuit, the communication apparatus to perform the method in any one of the first aspect and the possible implementations of the first aspect; or the communication apparatus to perform the method in any one of the second aspect and the possible implementations of the second aspect.

In a possible implementation, the communication apparatus further includes a memory, and the memory is configured to store the computer program or the instructions.

In a possible implementation, the communication apparatus further includes a communication interface, configured to input a signal and/or output a signal.

According to a seventh aspect, a communication apparatus is provided. The communication apparatus includes a logic circuit and an input/output interface. The input/output interface is configured to input a signal and/or output a signal. The logic circuit is configured to perform the method in any one of the first aspect and the possible implementations of the first aspect; or the logic circuit is configured to perform the method in any one of the second aspect and the possible implementations of the second aspect.

According to an eighth aspect, a computer-readable storage medium is provided. The computer-readable storage medium stores a computer program or instructions. When the computer program or the instructions are run on a computer, the method in any one of the first aspect and the possible implementations of the first aspect is performed, or the method in any one of the second aspect and the possible implementations of the second aspect is performed.

According to a ninth aspect, a computer program product is provided. The computer program product includes instructions. When the instructions are run on a computer, the method in any one of the first aspect and the possible implementations of the first aspect is performed, or the method in any one of the second aspect and the possible implementations of the second aspect is performed.

Descriptions of beneficial effects of the second aspect to the ninth aspect may correspond to the descriptions of the beneficial effects of the first aspect.

### BRIEF DESCRIPTION OF DRAWINGS

FIG. 1 is a block diagram of a communication system 100 to which an embodiment of this application is applicable;
FIG. 2 is a block diagram of a GCS architecture 200;
FIG. 3 is a schematic interaction flowchart of a communication method 300 according to an embodiment of this application;
FIG. 4 is a diagram of a relationship between a data packet 1 and a data packet 2;
FIG. 5 is a diagram of a change of a data volume of a data packet before and after processing;
FIG. 6A and FIG. 6B are a schematic interaction flowchart of a communication method 600 according to an embodiment of this application;
FIG. 7A and FIG. 7B are a schematic interaction flowchart of a communication method 700 according to an embodiment of this application;
FIG. 8 is a block diagram of a communication apparatus 800 according to an embodiment of this application; and
FIG. 9 is a block diagram of a communication apparatus 900 according to an embodiment of this application.

### DESCRIPTION OF EMBODIMENTS

For ease of understanding embodiments of this application, the following descriptions are provided first.
1. In this application, unless otherwise specified, "a plurality of" means two or more.
2. In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.
3. Various numbers in this application are merely used for differentiation for ease of description, but are not intended to limit the protection scope of this application. Sequence numbers in this application do not mean an execution sequence, and the execution sequence of processes should be determined based on functions and internal logic of the processes. For example, in this specification, the claims, and the accompanying drawings of this application, the terms "first", "second", "third", "fourth", and various other term numerals (if existent) are used for distinguishing between similar objects, but do not necessarily indicate a specific order or sequence. Data used in such a way is interchangeable in appropriate circumstances, so that embodiments described herein can be implemented in other orders than the order illustrated or described herein.

In addition, any embodiment or design solution described as an "example" or "for example" in this application should not be explained as being more preferred or having more advantages than another embodiment or design solution. Exactly, use of the terms such as "example" or "for example" is intended to present a related concept in a specific manner for ease of understanding.

4. The terms "include", "have", and any variants thereof are intended to cover a non-exclusive inclusion. For example, a process, a method, a system, a product, or a device that includes a series of steps or units is not necessarily limited to those expressly listed steps or units, but may include other steps or units not expressly listed or inherent to such a process, method, product, or device.

5. In this application, "indicate" may be understood as "enable", and "enable" may include "directly enable" and "indirectly enable". When a piece of information is described to enable A, the information may directly enable A or indirectly enable A, but it does not mean that the information definitely carries A.

Information enabled by information is referred to as to-be-enabled information. In a specific implementation process, the to-be-enabled information may be enabled in many manners, for example, but not limited to, the to-be-enabled information, for example, the to-be-enabled information or an index of the to-be-enabled information, may be directly enabled. Alternatively, the to-be-enabled information may be indirectly enabled by enabling other information, where there is an association relationship between the other information and the to-be-enabled information. Alternatively, only a part of the to-be-enabled information may be enabled, and other parts of the to-be-enabled information are known or agreed in advance. For example, specific information may be enabled through a pre-agreed (for example, protocol-defined) sequence of all information, to reduce enabling overheads to some extent. In addition, a common part of all the information may be identified and enabled in a unified manner, to reduce enabling overheads caused by enabling the same information separately.

6. In this application, the term "preconfiguration" may include predefinition, for example, definition in a protocol. The "predefinition" may be implemented by prestoring, in a device (including, for example, network elements), corresponding code, a corresponding table, or other related information that may be used for indication. A specific implementation thereof is not limited in this application.

7. "Storage" or "store" in this application may mean "being stored" in one or more memories. The one or more memories may be separately disposed, or may be integrated into an encoder or a decoder, a processor, or a communication apparatus. Alternatively, the one or more memories may be partially disposed separately, and partially integrated into a decoder, a processor, or a communication apparatus. A type of the memory may be a storage medium in any form. This is not limited.

8. The "protocol" in this application may be a standard protocol in the communication field, for example, may include a 4th generation (4th generation, 4G) network protocol, a 5th generation (5th generation, 5G) network protocol, a new radio (new radio, NR) protocol, a 5.5G network protocol, a 6th generation (6th generation, 6G) network protocol, and related protocols applied to future communication systems. This is not limited in this application.

9. Arrows or blocks shown by dashed lines in diagrams of the accompanying drawings in this specification of this application indicate optional steps or optional modules.

10. In this application, unless otherwise specified, "/" indicates that associated objects are in an "or" relationship. For example, A/B may represent A or B. The term "and/or" in this application describes only an association relationship for describing associated objects and represents that three relationships may exist. For example, A and/or B may represent the following three cases: Only A exists, both A and B exist, and only B exists. A and B may be singular or plural.

To better understand technical solutions of this application, the following provides descriptions from the following aspects: a communication system, method, and apparatus.

### I. Communication system

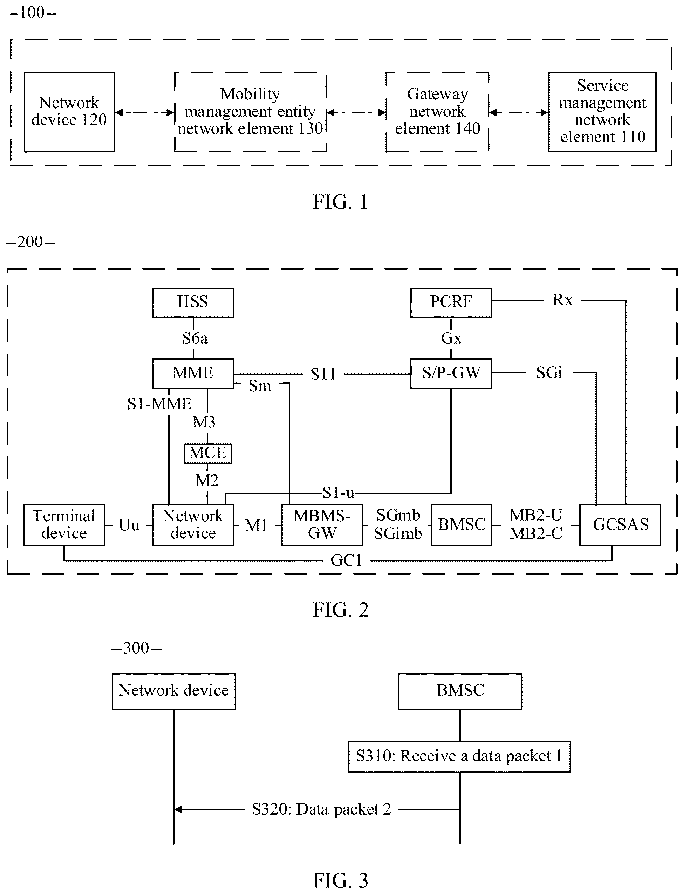

To resolve the technical problem mentioned in the background, this application provides an applicable communication system 100. As shown in FIG. 1, the communication system 100 includes a service management network element 110 and a network device 120. Optionally, the communication system 100 may further include a mobility management entity network element 130 and a gateway network element 140.

In the communication system 100, the service management network element 110 has a service management function, and may be responsible for, for example, session management (such as session initiation and session termination), proxy and transmission, and service data synchronization and forwarding management. The mobility management entity network element 130 has a mobility management capability, and may be responsible for, for example, receiving and transferring session control information to the network device 120, and performing session management (such as session initiation and session termination). The gateway network element 140 has a gateway capability, and may be responsible for, for example, transferring session control information to the mobility management entity network element 130, and forwarding a service data packet to the network device 120.

In the communication system 100, transmission of data, signaling, and the like between the service management network element 110 and the network device 120 may be performed via the mobility management entity network element 130 and the gateway network element 140. For example, the service management network element 110 sends data 1 to the gateway network element 140, and the gateway network element 140 sends the data 1 to the network device 120; and the network device 120 sends signaling 1 to the mobility management entity network element 130, the mobility management entity network element 130 sends the signaling 1 to the gateway network element 140, and the gateway network element 140 sends the signaling 1 to the service management service 110.

It should be noted that names of the service management network element 110, the mobility management entity network element 130, and the gateway network element 140 may be different or may be the same in different communication architectures. This is not limited. The following uses an example in which the communication system 100 is used in a GCS architecture for description.

FIG. 2 is a block diagram of a GCS architecture 200. As shown in FIG. 2, the GCS architecture 200 includes: a terminal device, a network device, an MBMS gateway (gateway, GW), a broadcast/multicast service center (broadcast/multicast service center, BMSC), a GCS application server (group communication service application server, GCSAS), a multi-cell/multicast coordination entity (multi-cell/multicast coordination entity, MCE), a mobility management entity (mobility management entity, MME), a home subscriber server (home subscriber server, HSS), a policy and charging rules function (policy and charging rules function, PCRF), a serving gateway (serving gateway, S-GW), and a public data network (public data network, PDN) gateway (P-GW). The MCE may be a module of the network device, that is, may be integrated into the network device, or may be deployed outside the network device. This is not limited. For ease of description, an example in which the MCE is deployed outside the network device is used below for description.

Specifically, the terminal device communicates with the network device through a Uu interface, the network device communicates with the MBMS-GW through an M1 interface, the MBMS-GW communicates with the BMSC through an SG-mb/SGi-mb interface, and the BMSC communicates with a GCSAS 1 and a GCSAS 2 through an MB2-U/MB2-C interface. The network device communicates with the MCE through an M2 interface, the MCE communicates with the MME through an M3 interface, the MME communicates with the MBMS-GW through an Sm interface, the MME communicates with the network device through an S1-MME interface, the MME communicates with the HSS through an S6a interface, the MME communicates with the S/P-GW through an S11 interface, and the S/P-GW communicates with the network device through an S1-u interface. The GCSAS 1 communicates with the PCRF through an Rx interface, and the GCSAS communicates with the S/P-GW through an SGi interface.

Further, the M1 interface is used by the MBMS-GW to send an MBMS service to the network device in an internet protocol (internet protocol, IP) multicast manner. The M2 interface is a control-plane interface between the network device and the MCE, and is used for transmission of eMBMS service session control information. The M3 interface is used for transmission of MBMS session control information and MBMS service information, such as MBMS broadcast areas and quality of service (quality of service, QoS) of an MBMS service. The Sm interface is used for transmission of eMBMS service bearer context information. The SG-mb interface is used for transmission of eMBMS service control information, eMBMS service parameters, and eMBMS service bearer context maintenance, and other information. The S1-MME interface is a signaling-plane interface between the network device and the MME. A signaling connection function of the S1-MME interface provides reliable transmission of radio network signaling. The S6a interface is a signaling-plane interface between the MME and the HSS, and is configured to provide functions related to user subscription data management and authentication. The S11 interface is a signaling-plane interface between the MME and the S-GW, and is mainly used for transmission of request information of bearer creating, updating, and deleting between the MME and the S-GW. When UE is in an evolved packet system connection management (evolved packet system connection management, ECM)-idle (IDLE) state, the S11 interface is used by the S-GW to notify the MME to page the UE to restore an S1 bearer. The Rx interface is an interface between the GCSAS and the PCRF, and is used for interaction between the GCSAS and an application function (application function, AF) system and used for receiving a service request from an application server. The GCSAS exchanges information with the AF system through the Rx interface to complete an application-based policy control function. The SGi interface is an interface between the PGW-U and the PDN, and is used for a user to access the PDN network. The SGi-mb interface is used for transmission of an MBMS service data packet in a multicast manner. The MB2-C interface is used for control plane negotiation, and is specifically configured to request allocation/releasing of a group of temporary mobile group identities (temporary mobile group identity, TMGI), and request activation, deactivation, and modification of an MBMS bearer. The MB2-U is used for user-plane data transmission.

Specifically, the terminal device may be configured to:
(1) exchange group communication 1 (group communication 1, GC1) signaling (including GCS sessions and group management) with the GCSAS;
(2) receive data from the GCSAS through unicast delivery or MBMS delivery, or by using both of the two delivery methods;
(3) send uplink data to the GCSAS in a unicast manner;
(4) support a service continuity procedure to perform switching between the unicast delivery and the MBMS delivery; and
(5) monitor and receive one or more MBMS services simultaneously.

The GCSAS may be configured to:
(1) exchange GC1 signaling (which includes GCS sessions and group management) with the terminal device;
(2) receive, in a unicast manner, uplink data sent by the terminal device; and perform transmission of data to all terminal devices belonging to a group, where unicast transmission and/or MBMS transmission may be used;
(3) perform transmission of application-level session information to the PCRF through the Rx interface; and
(4) support a service continuity process of performing switching between the unicast transmission and the MBMS transmission by the terminal device.

The BMSC may be configured to:
(1) perform eMBMS session management (such as session initiation and session termination);
(2) perform proxy and transmission; and
(3) perform service data synchronization and forwarding management.

The MBMS-GW may be configured to:
(1) transfer MBMS session control information to the MME and forwards the MBMS service to the network device.

The MME may be configured to:
(1) receive the MBMS session control information and transfer the MBMS session control information to the MCE; and
(2) perform MBMS session management (such as session initiation and session termination).

The MCE may be configured to:
(1) receive the MBMS session control information and transfer the MBMS session control information to the network device;
(2) schedule radio resources to ensure that all cells in a single MBMS area (MBSFN area, MA) occupy consistent radio resources; and
(3) perform MBMS session management (such as session initiation and session termination).

The network device is configured to:
(1) receive MCE controlling and resource scheduling; and
(2) receive an IP multicast packet (that is, eMBMS service data) delivered by the MBMS-GW and broadcast the packet to a specified MBMS service area.

A name of each network element shown in FIG. 2 is merely a name, and the name does not limit a function of the network element. In a 5G network and a future network, the foregoing network elements may alternatively have other names. This is not limited. For example, in a 6G network, some or all of the foregoing network elements may still use terms in 5G, or may use other names. A general description is provided herein. Details are not described again below.

In addition, the "network element" in this specification may also be referred to as a network function instance (network function instance), a device, an apparatus, a module, or the like. This is not limited. The foregoing names are defined merely for distinguishing between different functions, and should not constitute any limitation. This application does not exclude a possibility that another name is used in the 5G network and another future network. In addition, a name of an interface between the network elements is merely an example. In a specific implementation, the name of the interface may be another name. This is not limited. In addition, a name of information (or signaling) transmitted between the foregoing network elements is also merely an example, and does not constitute any limitation on functions of the information.

The service management network element 110 in FIG. 1 may be the BMSC in FIG. 2, the mobility management entity network element 130 may be the MME in FIG. 2, the gateway network element 140 may be the MBMS-GW in FIG. 2, and the network device 120 may be the network device in FIG. 2. For ease of description, the following uses an example in which the service management network element 110 is the BMSC, the mobility management entity network element 130 is the MME, and the gateway network element 140 is the MBMS-GW for description.

The following further describes interaction between the BMSC and the network device with reference to FIG. 3.

### II. Communication method

FIG. 3 is a schematic interaction flowchart of a communication method 300 according to an embodiment of this application. The method shown in FIG. 3 may be performed by a BMSC and a network device, or may be performed by a module and/or a component (for example, a chip or an integrated circuit) that are/is installed in the BMSC and the network device and that have/has a corresponding function. This is not limited. The following uses the BMSC and network devices as an example. As shown in FIG. 3, the method 300 includes the following steps.

S310: The BMSC receives a data packet 1 (for example, a first data packet), where a data volume of the data packet 1 in a scheduling period 1 (for example, a first scheduling period) is greater than a first value.

The BMSC receives the data packet 1 from a GCSAS. The GCSAS may send a plurality of data packets to the BMSC. For example, the GCSAS sends a data packet a, a data packet b, a data packet c, and the like to the BMSC. Data volumes of all the data packets in respective corresponding scheduling periods may be different, or may be the same. For example, different data packets have different data volumes in respective corresponding scheduling periods. For example, a data volume of the data packet a in a scheduling period a is 40 Kbit, a data volume of the data packet b in a scheduling period b is 20 Kbit, and data volume of the data packet c in a scheduling period c is 30 Kbit. Therefore, in this application, an example in which the data packet 1 represents a data packet whose data volume is greater than the first value is used for description. For example, the data packet 1 may be the foregoing data packet a. The scheduling period 1 may be the foregoing scheduling period a.

S320: The BMSC sends a data packet 2 to the network device. The data packet 2 is a data packet obtained by processing the data packet 1 by the BMSC, and a data volume of the data packet 2 in the scheduling period 1 is less than or equal to the first value.

In a possible implementation, that the BMSC sends the data packet 2 to the network device may be: The BMSC sends the data packet 2 to an MBMS-GW, and the MBMS-GW sends the data packet 2 to the network device.

The data packet 2 is the data packet obtained by processing the data packet 1 by the BMSC. The BMSC may process the data packet 1 based on the first value, so that a data volume, in the scheduling period 1, of the data packet 2 obtained by processing the data packet 1 is less than or equal to the first value.

In a possible implementation, the data packet 2 is a data packet obtained by allocating an additional data volume of the data packet 1 to a scheduling period 2 by the BMSC, and the additional data volume of the data packet 1 is a difference between the data volume of the data packet 1 in the scheduling period 1 and the first value. In this way, the BMSC reallocates the data volume of the data packet 1 in the scheduling period 1, so that the data volume, in the scheduling period 1, of the data packet 2 obtained by processing the data packet 1 is less than or equal to the first value.

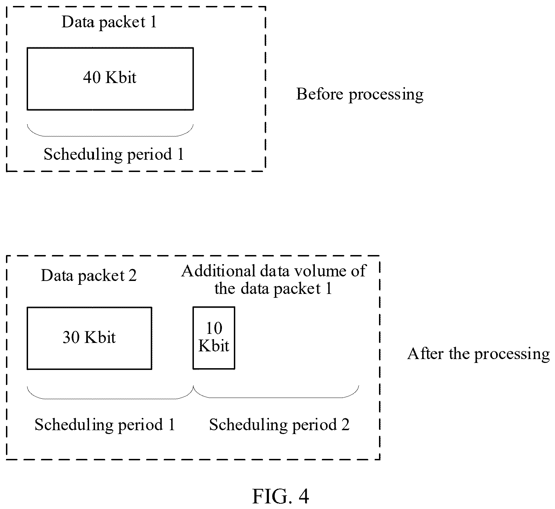

The scheduling period 2 may be an adjacent scheduling period of the scheduling period 1 (which may be a previous scheduling period of the scheduling period 1, or may be a next scheduling period of the scheduling period 1, and is not limited), or the scheduling period 1 and the scheduling period 2 are spaced apart from each other by a plurality of scheduling periods. This is not limited. For descriptions of the data packet 1 and the data packet 2, refer to FIG. 4.

FIG. 4 is a diagram of a relationship between the data packet 1 and the data packet 2. As shown in FIG. 4, an example in which the first value is 30 Kbit is used. The data volume of the data packet 1 in the scheduling period 1 is 40 Kbit. The BMSC allocates a data volume of 10 Kbit of the data packet 1 in the scheduling period 1 to the scheduling period 2, to obtain the data packet 2, and the data volume of the data packet 2 in the scheduling period 1 is 30 Kbit. The scheduling period 2 is the adjacent scheduling period of the scheduling period 1 (where an example in which the scheduling period 2 is the next scheduling period of the scheduling period 1 is used for description, but another scenario is not limited).

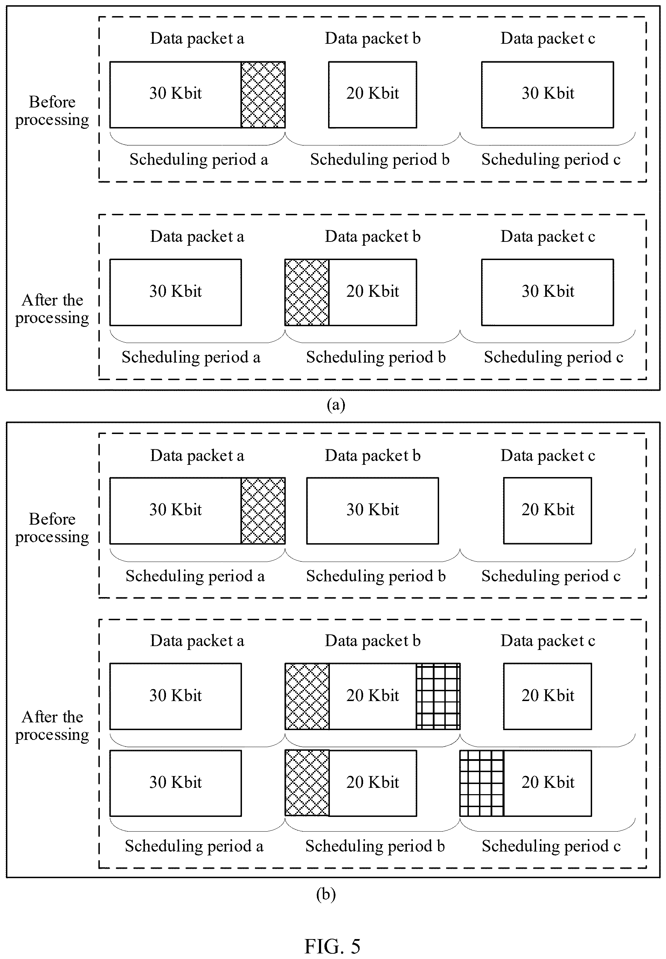

To further describe a change of a data volume of a data packet before and after processing, refer to FIG. 5.

FIG. 5 is a diagram of a change of a data volume of a data packet before and after processing. As shown in (a) in FIG. 5, the GCSAS sends the data packet a, the data packet b, and the data packet c to the BMSC. The data volume of the data packet a in the scheduling period a is 40 Kbit (which may be the foregoing data packet 1), the data volume of the data packet b in the scheduling period b is 20 Kbit, and the data volume of the data packet c in the scheduling period c is 30 Kbit. The first value is 30 Kbit. The BMSC processes the data packet a and the data packet b based on the first value, to obtain a processed data packet a and a processed data packet b. A data volume of the processed data packet a (which may be the foregoing data packet 2) in the scheduling period a is 30 Kbit, and a data volume of the processed data packet b in the scheduling period b is 30 Kbit.

Specifically, the BMSC allocates an additional data volume of 10 Kbit (represented by a cross-textured pattern) of the data packet a in the scheduling period a to the scheduling period b, so that the data volume of the processed data packet a in the scheduling period a is 30 Kbit. The additional data volume and the data packet b are sent in the scheduling period b. In the example shown in FIG. 5, the data packet c may not be modified because the data packet c does not exceed the first value.

As shown in (b) in FIG. 5, the GCSAS sends the data packet a, the data packet b, and the data packet c to the BMSC. The data volume of the data packet a (which may be the foregoing data packet 1) in the scheduling period a is 40 Kbit, the data volume of the data packet b in the scheduling period b is 30 Kbit, and the data volume of the data packet c in the scheduling period c is 20 Kbit. The first value is 30 Kbit. The BMSC processes the data packet a, the data packet b, and the data packet c based on the first value, to obtain a processed data packet a (which may be the foregoing data packet 2), a processed data packet b, and a processed data packet c. A data volume of the processed data packet a in the scheduling period a is 30 Kbit, a data volume of the processed data packet b in the scheduling period b is 30 Kbit, and a data volume of the processed data packet c in the scheduling period c is 30 Kbit.

Specifically, the BMSC allocates an additional data volume of 10 Kbit (represented by a cross-textured block) of the data packet a in the scheduling period a to the scheduling period b, so that the data volume of the processed data packet a in the scheduling period a is equal to 30 Kbit, and a data volume of the data packet b with the additional data volume of 10 Kbit of the data packet 1 in the scheduling period b is 40 Kbit, and an additional data volume of 10 Kbit (represented by a grid-textured block) of the data packet b with the additional data volume of 10 Kbit of the data packet 1 in the scheduling period b may be reallocated to the data packet c, and a data volume, in the scheduling period c, of the data packet c with the additional data volume of 10 Kbit of the data packet b in the scheduling period b is 30 Kbit.

When a data volume of a data packet received by the BMSC is greater than the first value, the BMSC may process the data packet, so that a data volume of a processed data packet is less than or equal to the first value. In this way, the network device may configure an appropriate resource for the data packet, and a phenomenon like excessive resource allocation or insufficient resource allocation can be avoided.

In conclusion, the BMSC adjusts a data volume of a data packet in a scheduling period based on the first value, so that a data volume of a processed data packet in the scheduling period is less than or equal to the first value, and distribution of data volumes of data packets is consistent between scheduling periods.

In a possible implementation, the first value may be a maximum data volume that can be scheduled by the network device in the scheduling period 1. In this way, the data volume of the data packet from the BMSC in the scheduling period does not exceed the maximum data volume that can be scheduled by the network device in the scheduling period. This can effectively avoid a data packet loss phenomenon.

In a possible implementation, the first value may be a value of a guaranteed bit rate (guaranteed bit rate, GBR) of the data packet 1 and a value of a scheduling period of the data packet 1. In this way, the network device can configure an appropriate resource for data packet transmission based on the GBR of the data packet 1 and the scheduling period of the data packet 1, and distribution of data volumes of data packets from the BMSC can be more uniform.

For example, an example in which the GBR of the data packet 1 is 750 Kbit/s and the scheduling period of the data packet 1 is 40 ms (which may alternatively be another value, and is not limited) is used for description. One second includes 25 scheduling periods, and for a data volume of the data packet 1 within 1s, an average data volume in each scheduling period is: 750 Kbit (1/40)=30 Kbit. Therefore, the first value may be 30 Kbit.

In a possible implementation, the value of the GBR of the data packet 1 and the value of the scheduling period of the data packet 1 are less than or equal to the maximum data volume that can be scheduled by the network device in the scheduling period 1. In this way, the data volume of the data packet from the BMSC in the scheduling period does not exceed the maximum data volume that can be scheduled by the network device in the scheduling period. This can effectively avoid a data packet loss phenomenon.

In another possible implementation, the first value may be preconfigured on the BMSC, or may be sent by the network device (for example, a base station or an access network device) to the BMSC. For example, the network device sends, to the BMSC, the maximum data volume that can be scheduled by the network device in the scheduling period, or the network device sends the scheduling period of the data packet 1 to the BMSC. In this way, the BMSC may process the data packet 1 based on the first value.

It may be understood that if the BMSC does not adjust a data volume of a data packet from the GCSAS in the scheduling period, the network device cannot configure an appropriate resource for the data packet from the BMSC for transmission. For example, it is assumed that the data volume of the data packet a in the scheduling period a is 40 Kbit, the data volume of the data packet b in the scheduling period b is 20 Kbit, and the data volume of the data packet c in the scheduling period c is 30 Kbit. If the network device configures a resource used for transmission of a data packet whose data volume is 40 Kbit, for data packets whose data volumes are 20 Kbit and 30 Kbit, a resource waste occurs; or if the network device configures a resource used for transmission of a data packet whose data volume is 30 Kbit, for a data packet whose data volume is 40 Kbit, resource allocation is insufficient, and a packet loss phenomenon may occur.

It should be noted that the scheduling period may be an MSP. For example, the scheduling period 1 is an MSP 1, and the scheduling period 2 is an MSP 2. In this way, this solution is compatible with conventional technologies.

In conclusion, in this application, the BMSC is supported in processing a data packet, so that a data volume of a processed data packet in a scheduling period is less than or equal to the first value, and distribution of data volumes of data packets is consistent between scheduling periods. In this way, the network device can uniformly configure a resource used for data transmission.

It should be noted that a type of the data packet (for example, the data packet 1 or the data packet a) in the foregoing content may be an MBMS service data packet, or may be a data packet type similar or analogous to the MBMS service data packet. This is not limited.

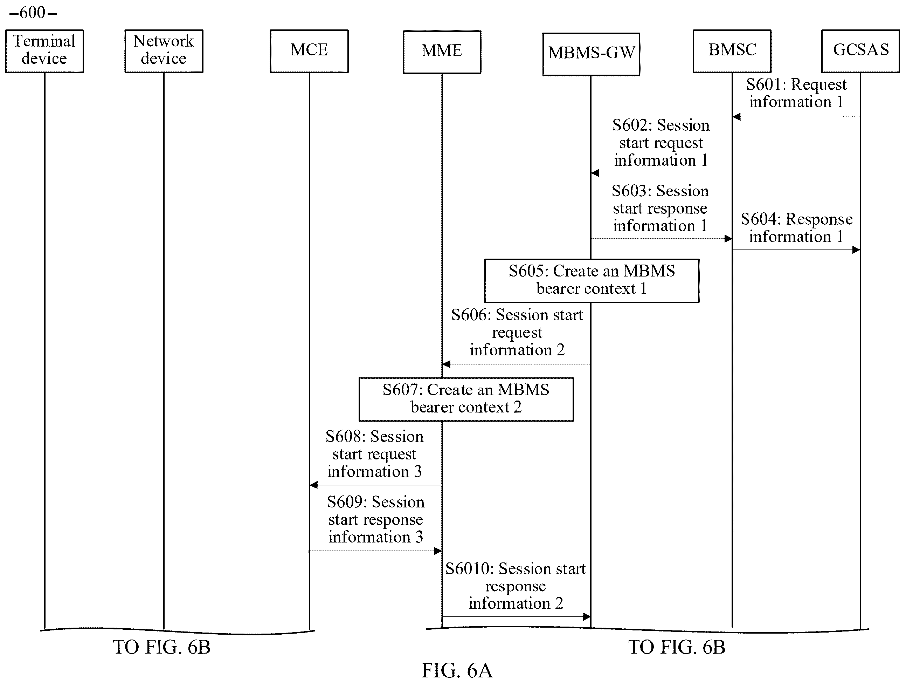

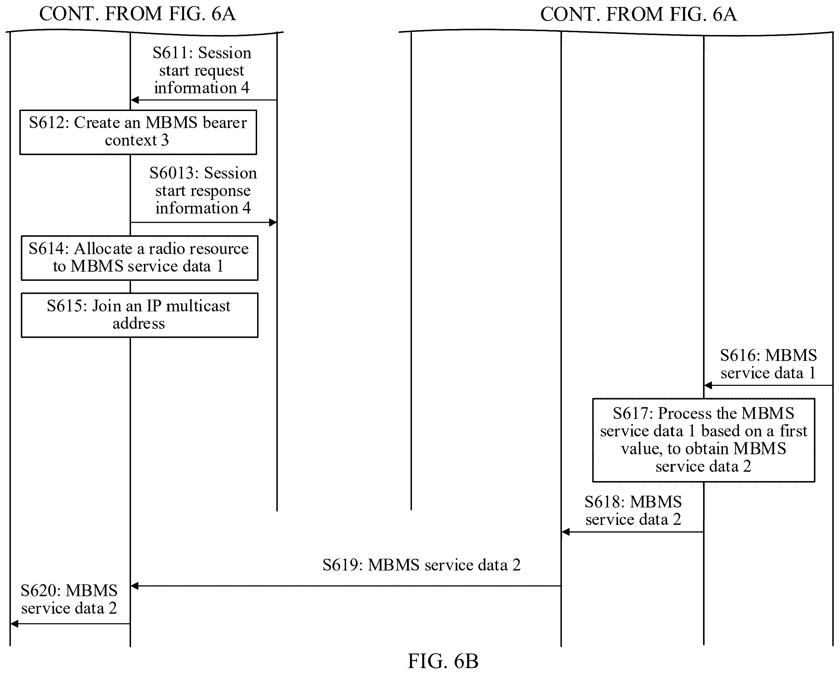

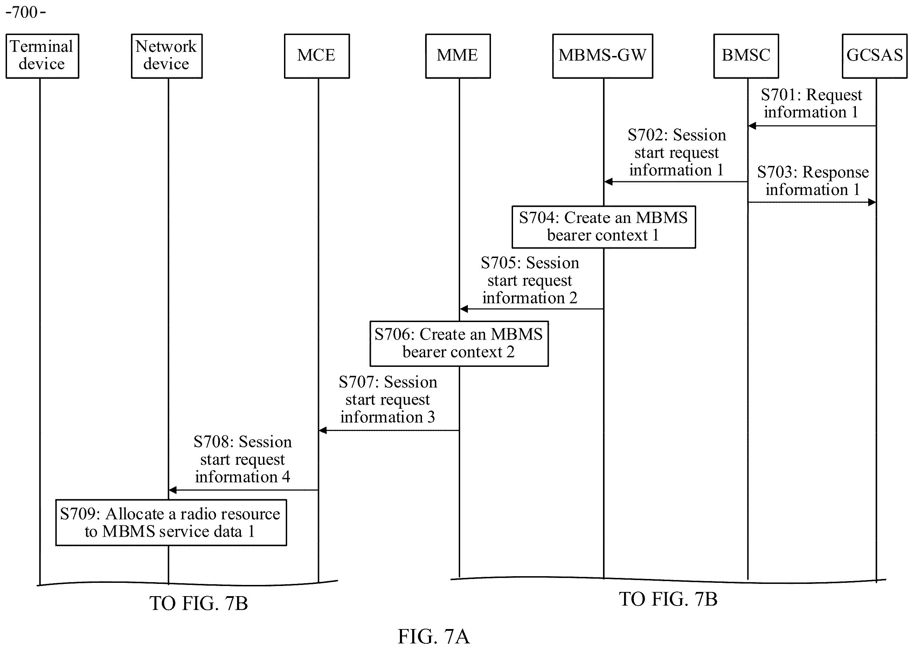

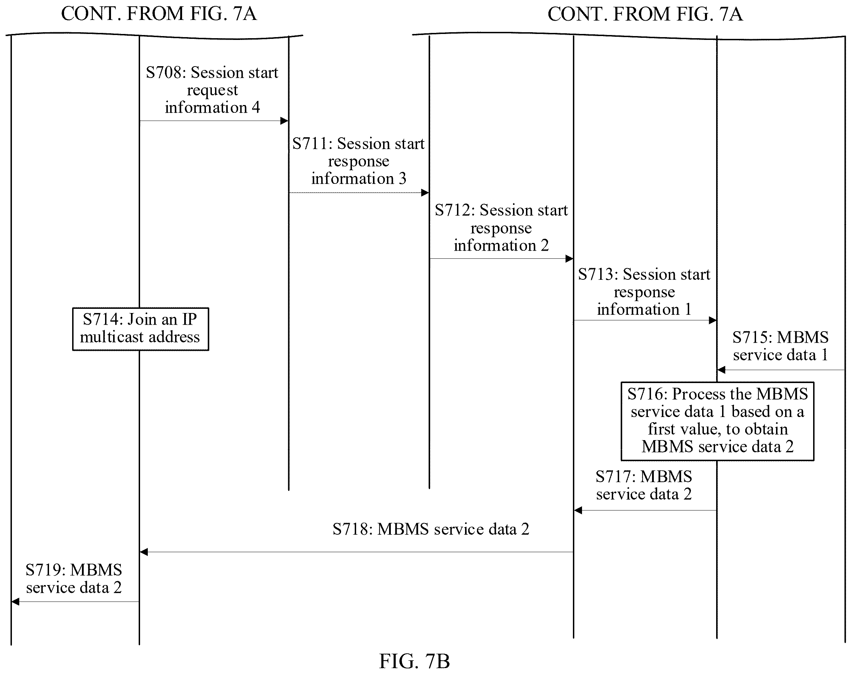

The following further describes the method shown in FIG. 3 with reference to FIG. 6A and FIG. 6B and FIG. 7A and FIG. 7B.

FIG. 6A and FIG. 6B are a schematic interaction flowchart of a communication method 600 according to an embodiment of this application. As shown in FIG. 6A and FIG. 6B, the method 600 includes the following steps.

S601: A GCSAS sends request information 1 to a BMSC, where the request information 1 is used to request to activate an MBMS bearer.

Correspondingly, the BMSC receives the request information 1, and determines, based on the request information 1, that the MBMS bearer needs to be activated, where the MBMS bearer is used to carry transmission of MBMS service data 1. The MBMS service data 1 includes the foregoing data packet 1.

The request information 1 includes one or more of the following: a temporary mobile group identity (temporary mobile group identity, TMGI) (where the TMGI is optional), quality of service (quality of service, QoS), an MBMS broadcast area, and start time of the MBMS bearer.

The TMGI is used to identify a group of an eMBMS session. The QoS indicates requirements such as a GBR, a maximum bit rate (maximum bit rate, MBR), and a priority of a service flow. The MBMS broadcast area indicates an area in which a receiving object of the MBMS service data 1 is located, and the start time indicates transmission time of the MBMS service data 1. For detailed descriptions of the foregoing parameters, refer to descriptions in sections 5.3.2 and 6.6.2 in the 3GPP protocol technical specification (technical specification, TS) 29.468. Details are not described.

In addition, the request information 1 may further include content such as a service type and a GBR of the MBMS service data 1, which can be used by the BMSC to determine a value of a scheduling period of the MBMS service data 1, to determine a first value.

S602: The BMSC sends session start request information (session start request) 1 to an MBMS-GW, where the information indicates that transmission of the MBMS service data 1 is about to start.

Correspondingly, the MBMS-GW receives the session start request information 1.

The session start request information 1 includes session attribute information 1 of the MBMS service data 1. The session attribute information 1 includes one or more of the following: a TMGI, a flow identifier, QoS, an MBMS service area, a cell identifier list, a session identifier, estimated session duration, an MBMS control plane node list configured for the MBMS-GW, transmission time of the MBMS service data 1, transmission start of the MBMS service data 1, an access indicator, and the like. For the TMGI and the QoS in the foregoing message, refer to the foregoing descriptions. Details are not described again.

The TMGI is used to identify a group of an eMBMS session. Because one eMBMS may carry a plurality of service flows, the flow identifier is used to identify a current service flow. The MBMS service area represents a range within which an eMBMS session needs to be sent (where MBMS service areas are configured on an MCE and a base station, and a service flow corresponding to the session is sent only in a corresponding SA). The cell ID list indicates a cell in which a broadcast/multicast service is currently broadcast. The session identifier is used to identify an ID of a current session. The estimated session duration indicates possible duration of the current session. The MBMS control plane node list configured for the MBMS-GW indicates a control plane node participating in the eMBMS session. The transmission time of the MBMS service data 1 indicates specific transmission time of the MBMS service data 1. The transmission start of the MBMS service data 1 indicates that transmission of the MBMS service data 1 is about to start. For detailed descriptions of the foregoing parameters, refer to descriptions in sections 20.3.1 and 20.4.1 in the 3GPP protocol TS 29.061. Details are not described.

S603: The MBMS-GW sends session start response information (session start response) 1 to the BMSC.

Correspondingly, the BMSC receives the session start response information 1.

The session start response information 1 is a response to the session start request information 1. The session response information 1 may include: result code (Result-Code) (indicating whether the request succeeds or fails), a MBMS-GW-UDP-Port (indicating a port used by the MBMS-GW to receive BMSC data), and the like. For details, refer to section 20.4.2 in the 3GPP protocol TS 29.061. For detailed descriptions of the foregoing parameters, refer to descriptions in sections 20.3.1 and 20.4.2 in the 3GPP protocol TS 29.061. Details are not described.

S604: The BMSC sends response information 1 to the GCSAS.

Correspondingly, the GCSAS receives the response information 1, where the information indicates that an MBMS bearer 1 is activated.

The response information 1 is a response to the request information 1. The response information 1 includes one or more of the following: a bearer activation result (which may indicate that the MBMS bearer is activated), a TMGI, an allocated flow ID, a service description, a user-plane IP address and a port number of a BM-SC, expiration time, and the like. For detailed descriptions of the response information 1, refer to sections 5.3.2 and 6.4.7 in the 3GPP TS 29.468. Details are not described.

S605: The MBMS-GW creates an MBMS bearer context 1, which may be used to reserve a resource for transmission of the MBMS service data 1.

Specifically, the MBMS-GW stores the session attribute information 1 and the MBMS control plane node list in the MBMS bearer context 1, and allocates a transport network IP multicast address.

S606: The MBMS-GW sends session start request information 2 to an MME.

Correspondingly, the MME receives the session start request information 2.

Specifically, the session start request information 2 includes session attribute information 2 of the MBMS service data 1. The session attribute information 2 includes one or more of the following: a TMGI, a flow identifier, QoS, an MBMS service area, a cell ID list, a session identifier, estimated session duration, a transport network IP multicast address, and the like. For detailed descriptions of the foregoing parameters, refer to descriptions in section 7.13.1 in the 3GPP protocol TS 29.274. Details are not described.

S607: The MME creates an MBMS bearer context 2, which is used to notify a corresponding MCE to create a session corresponding to transmission of the MBMS service data 1.

Specifically, the MME stores the session attribute information 2 in the MBMS bearer context 2.

S608: The MME sends session start request information 3 to the MCE.

Correspondingly, the MCE receives the session start request information 3. The session start request information 3 includes session attribute information 2.

S609: The MCE sends session start response information 3 to the MME.

Correspondingly, the MME receives the session start response information 3, and determines, based on the session start response information 3, that the MCE receives the session start request information 3.

The session start response information 3 is a response to the session start request information 3.

S610: The MME sends session start response information 2 to the MBMS-GW.

Correspondingly, the MBMS-GW receives the session start response information 2, and determines, based on the session start response information 2, that the MME receives the session start request information 2.

The session start response information 2 is a response to the session start request information 2.

S611: The MCE sends session start request information 4 to a network device.

Correspondingly, the network device receives the session start request information 4.

Specifically, the session start request information 4 includes session attribute information 3 of the MBMS service data 1. The session attribute information 3 includes one or more of the following: a TMGI, an MBMS session ID, an MBMS service area, a transport network IP multicast address, a multicast source IP address, and the like. For detailed descriptions of the foregoing parameters, refer to descriptions in section 8.3.2 in the 3GPP protocol TS 23.246. Details are not described.

S612: The network device creates an MBMS bearer context 3, which is used to reserve a resource for transmission of the MBMS service data 1.

Specifically, the network device stores the session attribute information 3 in the MBMS bearer context 3.

More specifically, the network device stores the session attribute information 3 by creating the MBMS bearer context 3, to subsequently perform multicast address joining, air interface resource allocating, and other operations based on the information.

S613: The network device sends session start response information 4 to the MCE.

Correspondingly, the MCE receives the session start response information 4, and determines, based on the session start response information 4, that the network device receives the session start request information 4.

The session start response information 4 is a response to the session start request information 4.

S614: The network device allocates a radio resource to the MBMS service data 1.

Specifically, the network device generally configures the radio resource for the MBMS service data 1 based on a GBR of the MBMS service data 1, and a unit of the GBR is second. However, the network device actually schedules the data based on an MSP, and a unit of the MSP is millisecond. Generally, the network device may normally schedule a data volume of the MBMS service data 1 in each MSP. However, because data volumes in all MSPs may be different, the network device may undergo a packet loss phenomenon in some MSPs due to an excessively large data volume. Therefore, a data volume of a data packet sent to the network device needs to be adjusted, so that the data volume does not exceed a maximum scheduling capability of the network device. For a specific adjustment manner, refer to the following steps.

S615: The network device joins an IP multicast address.

Specifically, if accepting IP multicast distribution, the network device joins the transport network IP multicast address (including the multicast source IP address) allocated by the MBMS-GW, to enable a function of receiving the MBMS service data 1.

Specifically, because multicast data is sent by the MBMS-GW to the network device in a multicast manner, the network device needs to join a multicast group (that is, join the transport network IP multicast address allocated by the MBMS-GW) to receive a multicast packet sent by the MBMS-GW.

S616: The GCSAS sends the MBMS service data 1 to the BMSC.

Correspondingly, the BMSC receives the MBMS service data 1.

For detailed descriptions of S601 to S616, refer to descriptions in section 8.3.2 in the 3GPP protocol TS 23.246. Details are not described.

It should be noted that a sequence of S601 to S616 may be indicated by numbers. A smaller number indicates earlier execution and a larger number indicates later execution. However, this is not limited. For example, S616 may be performed after S604 (for example, may be performed concurrently with S605 and the like). Therefore, the foregoing descriptions are merely examples, and do not constitute a final limitation. Content in S601 to S615 may be understood as a process of preparing for transmission of the MBMS service data 1 by a plurality of network elements such as the GCSAS, the BMSC, the MBMS-GW, the MME, and the MCE. Therefore, for detailed descriptions, refer to descriptions in an existing protocol. Details are not described.

S617: The BMSC processes the MBMS service data 1 based on the first value, to obtain BMBS service data 2.

Specifically, the BMSC obtains the service type and the GBR of the MBSMS service data 1 based on the request information 1, and finds the scheduling period corresponding to the MBMS service data 1 from a preconfigured parameter. Further, the BMSC processes the received MBMS service data 1 based on the first value, to obtain MBMS service data 2. The first value is a ratio of the GBR of the MBMS service data 1 to the scheduling period of the MBMS service data 1. For detailed descriptions, refer to the descriptions of S320, FIG. 4, FIG. 5, and the like. Details are not described again.

S618: The BMSC sends the MBMS service data 2 to the MBMS-GW.

Correspondingly, the MBMS-GW receives the MBMS service data 2.

S619: The MBMS-GW sends the MBMS service data 2 to the network device.

Correspondingly, the network device receives the MBMS service data 2.

S620: The network device delivers the MBMS service data 2 to the terminal device.

Correspondingly, the terminal device receives the MBMS service data 2.

In conclusion, in this application, the BMSC is supported in processing a data packet, so that a data volume of a processed data packet in a scheduling period is less than or equal to the first value, and distribution of data volumes of data packets is consistent between scheduling periods. In this way, the network device can uniformly configure a resource used for data transmission.

In addition, a scheduling period of each type of service is preconfigured on the BMSC, so that the BMSC can directly obtain the scheduling period of each type of service, to reduce signaling overheads of exchanging the scheduling period between the BMSC and another network element.

It should be noted that content shown in FIG. 6A and FIG. 6B is described by using an example in which the scheduling period is preconfigured. The maximum data volume that can be scheduled by the network device in the scheduling period may also be preconfigured. These two solutions are similar, and details are not described again. This application further supports a solution in which the BMSC can obtain the scheduling period in another manner. Refer to FIG. 7A and FIG. 7B.

FIG. 7A and FIG. 7B are a schematic interaction flowchart of a communication method 700 according to an embodiment of this application. As shown in FIG. 7A and FIG. 7B, the method 700 includes the following steps.

S701: A GCSAS sends request information 1 to a BMSC.

For descriptions of S701, refer to the foregoing descriptions of S601. Details are not described again.

S702: The BMSC sends session start request information 1 to an MBMS-GW.

For descriptions of S702, refer to the foregoing descriptions of S602. Details are not described again.

S703: The BMSC sends response information 1 to the GCSAS.

For descriptions of S703, refer to the foregoing descriptions of S604. Details are not described again.

S704: The MBMS-GW creates an MBMS bearer context 1, which is used to reserve a resource for transmission of MBMS service data 1.

For descriptions of S704, refer to the foregoing descriptions of S605. Details are not described again.

S705: The MBMS-GW sends session start request information 2 to an MME.

For descriptions of S705, refer to the foregoing descriptions of S606. Details are not described again.

S706: The MME creates an MBMS bearer context 2.

For descriptions of S706, refer to the foregoing descriptions of S607. Details are not described again.

S707: The MME sends session start request information 3 to an MCE.

For descriptions of S705, refer to the foregoing descriptions of S608. Details are not described again.

S708: The MCE sends session start request information 4 to a network device.

For descriptions of S708, refer to the foregoing descriptions of S611. Details are not described again.

S709: The network device allocates a radio resource to the MBMS service data 1.

For descriptions of S709, refer to the foregoing descriptions of S614. Details are not described again.

S710: The network device sends session start response information 4 to the MCE.

For descriptions of S710, refer to the foregoing descriptions of S613. Details are not described again.

S711: The MCE sends session start response information 3 to the MME. The session start response information 3 includes a scheduling period of the MBMS service data 1. The scheduling period of the MBMS service data 1 may be preconfigured on the MCE.

This application supports the MCE in preconfiguring a correspondence between the scheduling period of the MBMS service data 1 and a service type of the MBMS service data 1, and determining the service type of the MBMS service data 1 based on session attribute information sent by another network element, to determine the scheduling period of the MBMS service data 1.

For descriptions of S711, refer to the foregoing descriptions of S609. Details are not described again.

S712: The MME sends session start response information 2 to the MBMS-GW. The session start response information 2 includes the scheduling period of the MBMS service data 1.

For descriptions of S712, refer to the foregoing descriptions of S610. Details are not described again.

S713: The MBMS-GW sends session start response information 1 to the BMSC. The session start response information 1 includes the scheduling period of the MBMS service data 1.

For descriptions of S713, refer to the foregoing descriptions of S603. Details are not described again.

S714: The network device joins an IP multicast address.

For descriptions of S714, refer to the foregoing descriptions of S615. Details are not described again.

S715: The GCSAS sends the MBMS service data 1 to the BMSC.

For detailed descriptions of S701 to S715, refer to descriptions in section 8.3.2 in the 3GPP protocol TS 23.246. Details are not described.

S716: The BMSC processes the MBMS service data 1 based on a first value, to obtain BMBS service data 2.

The BMSC may obtain the service type and the GBR of the MBSMS service data 1 based on the request information 1, and obtain the scheduling period of the MBMS service data 1 based on the session start response information 1. Further, the BMSC processes the received MBMS service data 1 based on the first value (where the first value is a ratio of the GBR to the scheduling period), to obtain MBMS service data 2. For detailed descriptions, refer to the descriptions of S320, FIG. 4, FIG. 5, and the like. Details are not described again.

S717: The BMSC sends the MBMS service data 2 to the MBMS-GW.

S718: The MBMS-GW sends the MBMS service data 2 to the network device.

S719: The network device delivers the MBMS service data 2 to the terminal device.

Correspondingly, the terminal device receives the MBMS service data 2.

In conclusion, in this application, the BMSC is supported in processing a data packet, so that a data volume of a processed data packet in a scheduling period is less than or equal to the first value, and distribution of data volumes of data packets is consistent between scheduling periods. In this way, the network device can uniformly configure a resource used for data transmission.

It should be noted that content shown in FIG. 7A and FIG. 7B is described by using an example in which the scheduling period is sent by the network device to the BMSC. The network device may also send, to the BMSC, the maximum data volume that can be scheduled by the network device in the scheduling period. These two solutions are similar, and details are not described again.

In addition, the network device sends the scheduling period to the BMSC, to avoid a case in which a scheduling period is configured for each type of service on the BMSC, to reduce overheads of the BMSC.

Finally, apparatus embodiments in embodiments of this application are described.

To implement functions in the methods provided in this application, both a terminal device and a network device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraint conditions of the technical solutions.

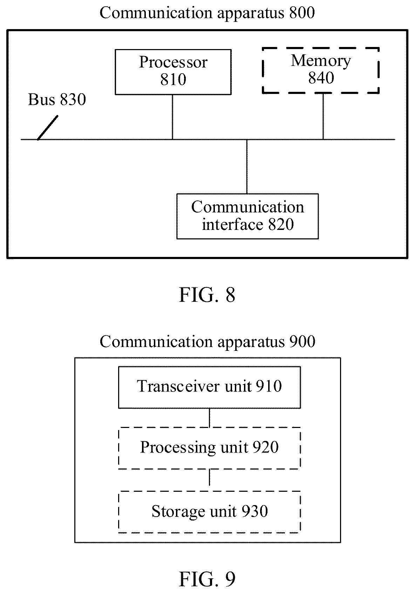

FIG. 8 is a block diagram of a communication apparatus 800 according to an embodiment of this application. The communication apparatus 800 includes a processor 810 and a communication interface 820. The processor 810 and the communication interface 820 may be connected to each other through a bus 830. The communication apparatus 800 may be a network device, or may be a service management network element, or the like, or may be another network element, device, or the like in the foregoing method embodiments.

Optionally, the communication apparatus 800 may further include a memory 840. The memory 840 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 840 is configured to store related instructions and data.

The processor 810 may be one or more central processing units (central processing unit, CPU). When the processor 810 is one CPU, the CPU may be a single-core CPU, or may be a multi-core CPU. The processor 810 may be a signal processor, a chip, another integrated circuit that can implement the methods in this application, or a part of circuits that are in the foregoing processor, chip, or integrated circuit and that are configured to perform a processing function. In addition, the communication interface 820 may alternatively be an input/output interface. The input/output interface is configured to input or output a signal or data, or may be an input/output circuit.

When the communication apparatus 800 is the service management network element, the processor 810 is, for example, configured to perform the following operations: receiving a data packet 1, sending a data packet 2, and the like.

When the communication apparatus 800 is the network device, the processor 810 is, for example, configured to perform the following operations: receiving a data packet 2, sending the data packet 2, and the like.

The content is merely used as an example for description. When the communication apparatus 800 is the network device and the service management network element, the communication apparatus 800 is responsible for performing methods or steps related to the network device and the service management network element in the foregoing method embodiments.

It may be understood that when the communication apparatus 800 is the network device or the service management network element, the communication interface 820 may also be referred to as a transceiver. The foregoing descriptions are merely examples. For specific content, refer to the content shown in the foregoing method embodiments. For an implementation of the operations in FIG. 8, refer to the corresponding descriptions of the method embodiments shown in FIG. 3 to FIG. 7A and FIG. 7B.

FIG. 9 is a block diagram of a communication apparatus 900 according to an embodiment of this application. The communication apparatus 900 may be a network device or a service management network element, or may be a chip or a module in the network device or the service management network element, and is configured to implement the methods in the foregoing embodiments. The communication apparatus 900 includes a transceiver unit 910. The following describes the transceiver unit 910 by using an example.

The transceiver unit 910 may include a sending unit and a receiving unit. The sending unit is configured to execute a sending action of the communication apparatus, and the receiving unit is configured to execute a receiving action of the communication apparatus. For ease of description, in embodiments of this application, the sending unit and the receiving unit are combined into one transceiver unit. Unified descriptions are provided herein, and details are not described again below.

When the communication apparatus 900 is the service management network element, the transceiver unit 910 is, for example, configured to perform receiving a data packet 1, and is further configured to perform sending a data packet 2 and the like.

Optionally, the communication apparatus 900 may further include a processing unit 920, configured to perform content related to steps such as processing and coordination of the service management network element. For example, the processing unit 920 is configured to process the data packet 1 to obtain the data packet 2.

When the communication apparatus 900 is the network device, the transceiver unit 910 is, for example, configured to receive a data packet 2 and send the data packet 2.

The content is merely used as an example for description. When the communication apparatus 900 is the network device and the service management network element, the communication apparatus 900 is responsible for performing methods or steps related to the network device and the service management network element in the foregoing method embodiments.

Optionally, the communication apparatus 900 further includes a storage unit 930, and the storage unit 930 is configured to store a program or code used for performing the foregoing methods.

The apparatus embodiments shown in FIG. 8 and FIG. 9 are used for implementing the content described in FIG. 3 to FIG. 7A and FIG. 7B. For specific execution steps and methods of the apparatuses shown in FIG. 8 and

FIG. 9, refer to the content described in the foregoing method embodiments.

This application further provides a chip. The chip includes a processor, configured to invoke instructions from a memory and run the instructions stored in the memory, so that a communication device on which the chip is installed is caused to perform the methods in the foregoing examples.

This application further provides another chip. The chip includes an input interface, an output interface, and a processor. The input interface, the output interface, and the processor are connected through an internal connection path. The processor is configured to execute code in a memory; and when the code is executed, the processor is configured to perform the methods in the foregoing examples. Optionally, the chip further includes the memory. The memory is configured to store a computer program or code.

This application further provides a processor, configured to be coupled to a memory, and configured to perform the method and the function that are related to the network device or the terminal device in any one of the foregoing embodiments.

Another embodiment of this application provides a computer program product including instructions. When the computer program product is run on a computer, the method in the foregoing embodiments is implemented.

This application further provides a computer program. When the computer program is run on a computer, the method in the foregoing embodiment is implemented.

Another embodiment of this application provides a computer-readable storage medium. The computer-readable storage medium stores a computer program. When the computer program is executed by a computer, the method in the foregoing embodiments is implemented.

A person of ordinary skill in the art may be aware that, units and algorithm steps with reference to the examples described in embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, the disclosed system, apparatuses, and method may be implemented in another manner. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, in other words, may be located in one position, or may be distributed on a plurality of network units. Some or all of the units may be selected based on actual needs to achieve the objectives of the solutions of embodiments.

In addition, functional units in embodiments of this application may be integrated into one processing unit, or each unit may exist alone physically, or two or more units may be integrated into one unit.

When functions are implemented in the form of a software functional unit and sold or used as an independent product, the functions may be stored in a computer-readable storage medium. Based on such an understanding, the technical solutions in embodiments of this application essentially, or the part contributing to conventional technologies, or some of the technical solutions may be implemented in a form of a software product. The computer software product is stored in a storage medium, and includes several instructions for instructing a computer device (which may be a personal computer, a server, or a network device) to perform all or some of the steps of the methods in various embodiments of this application. The foregoing storage medium includes any medium that can store program code, such as a USB flash drive, a removable hard disk drive, a ROM, a RAM, a magnetic disk, or an optical disc.

The foregoing descriptions are merely specific implementations in embodiments of this application, but are not intended to limit the protection scope of embodiments of this application. Any variation or replacement readily figured out by a person skilled in the art within the technical scope disclosed in embodiments of this application shall fall within the protection scope in embodiments of this application. Therefore, the protection scope of embodiments of this application should be subject to the protection scope of the claims.

## Claims

1. A communication method, comprising:
receiving a first data packet, wherein a data volume of the first data packet in a first scheduling period is greater than a first value; and
sending a second data packet, wherein the second data packet is a data packet obtained by processing the first data packet, and a data volume of the second data packet in the first scheduling period is less than or equal to the first value.

2. The method according to claim 1, wherein that the second data packet is the data packet obtained by processing the first data packet comprises:
the second data packet is a data packet obtained by allocating an additional data volume of the first data packet to a second scheduling period, and the additional data volume of the first data packet is a difference between the data volume of the first data packet in the first scheduling period and the first value.

3. The method according to claim 1 or 2, wherein the first value is a maximum data volume that can be scheduled by a network device in the first scheduling period.

4. The method according to claim 3, wherein the method further comprises:
receiving the first value.

5. The method according to claim 1 or 2, wherein the first value is a ratio of a guaranteed bit rate of the first data packet to a scheduling period of the first data packet.

6. The method according to claim 5, wherein the scheduling period of the first data packet is preconfigured.

7. The method according to claim 5, wherein the method further comprises:
receiving the scheduling period of the first data packet.

8. The method according to any one of claims 2 to 7, wherein the first scheduling period is adjacent to the second scheduling period.

9. The method according to any one of claims 5 to 8, wherein the ratio of the guaranteed bit rate of the first data packet to the scheduling period of the first data packet is less than or equal to the maximum data volume that can be scheduled by the network device in the first scheduling period.

10. The method according to any one of claims 2 to 9, wherein the first scheduling period is a first multicast channel scheduling period MSP, and the second scheduling period is a second MSP.

11. A communication method, wherein the method comprises:
receiving a second data packet, wherein the second data packet is a data packet obtained by processing a first data packet, a data volume of the first data packet in a first scheduling period is greater than a first value, and a data volume of the second data packet in the first scheduling period is less than or equal to the first value; and
sending the second data packet.

12. The method according to claim 11, wherein that the second data packet is the data packet obtained by processing the first data packet comprises:
the second data packet is a data packet obtained by allocating an additional data volume of the first data packet to a second scheduling period, and the additional data volume of the first data packet is a difference between the data volume of the first data packet in the first scheduling period and the first value.

13. The method according to claim 11 or 12, wherein the first value is a maximum data volume that can be scheduled by a network device in the first scheduling period.

14. The method according to claim 13, wherein the method further comprises:
sending the first value.

15. The method according to claim 11 or 12, wherein the first value is a ratio of a guaranteed bit rate of the first data packet to a scheduling period of the first data packet.

16. The method according to claim 15, wherein the scheduling period of the first data packet is preconfigured.

17. The method according to claim 15, wherein the method further comprises:
sending the scheduling period of the first data packet.

18. The method according to any one of claims 12 to 17, wherein the first scheduling period is adjacent to the second scheduling period.

19. The method according to any one of claims 15 to 18, wherein the ratio of the guaranteed bit rate of the first data packet to the scheduling period of the first data packet is less than or equal to the maximum data volume that can be scheduled by the network device in the first scheduling period.

20. The method according to any one of claims 12 to 19, wherein the first scheduling period is a first MSP, and the second scheduling period is a second MSP.

21. A communication system, comprising a service management network element and a network device, wherein
the service management network element is configured to receive a first data packet, wherein a data volume of the first data packet in a first scheduling period is greater than a first value; and is further configured to send a second data packet to the network device, wherein the second data packet is a data packet obtained by processing the first data packet by the service management network element, and a data volume of the second data packet in the first scheduling period is less than or equal to the first value; and
the network device is configured to receive the second data packet; and is further configured to send the second data packet.

22. The system according to claim 21, further comprising a mobility management entity network element and a gateway network element, wherein
the network device is configured to send the first value to the mobility management entity network element;
the mobility management entity network element is configured to receive the first value; and is configured to send the first value to the gateway network element; and
the gateway network element is configured to receive the first value; and is configured to send the first value to the service management network element.

23. The system according to claim 21, further comprising a mobility management entity network element and a gateway network element, wherein
the network device is configured to send a scheduling period of the first data packet to the mobility management entity network element;
the mobility management entity network element is configured to receive the scheduling period of the first data packet; and is configured to send the scheduling period of the first data packet to the gateway network element; and
the gateway network element is configured to receive the scheduling period of the first data packet; and is configured to send the scheduling period of the first data packet to the service management network element.

24. A communication apparatus, comprising a unit configured to perform the method according to any one of claims 1 to 10, or comprising a unit configured to perform the method according to any one of claims 11 to 20.

25. A computer-readable storage medium, wherein the computer-readable storage medium stores a computer program or instructions, and when the computer program or the instructions are run on a computer, the method according to any one of claims 1 to 10 is performed, or the method according to any one of claims 11 to 20 is performed.

26. A computer program product, comprising instructions, and when the instructions are run on a computer, the method according to any one of claims 1 to 10 is performed, or the method according to any one of claims 11 to 20 is performed.
